# EUROPEAN PATENT SPECIFICATION

(11) **EP 2 264 375 B1**
(45) Date of publication and mention of the grant of the patent: **16.08.2017**
(21) Application number: 10251000.5
(22) Date of filing: 28.05.2010
(51) Int. Cl.: F24F 12/00, F24F 3/153

(54) **Ventilation device and controlling method of the same**
Belüftungsvorrichtung und Steuerungsverfahren dafür
Dispositif de ventilation et son procédé de commande

(30) Priority: 29.05.2009 KR 20090047440
(43) Date of publication of application: 22.12.2010
(73) Proprietor: LG Electronics Inc., Seoul (KR)
(72) Inventor: Cho, Min Chul, Gyeongsangnam-do 641-711 (KR); Song, Jae Sun, Gyeongsangnam-do 641-711 (KR); Kim, Jeong Hun, Gyeongsangnam-do 641-711 (KR)
(74) Representative: Boult Wade Tennant

(56) References cited:
- EP-A1- 1 855 064
- WO-A1-2009/065216
- WO-A2-2007/097513
- FR-A1- 2 874 421
- GB-A- 2 332 048
- US-A- 5 855 320

## Description

### BACKGROUND OF THE DISCLOSURE

### Field of the Disclosure

The present invention relates to a ventilation device having a heating/cooling function implemented in communication with an air conditioner, to prevent cooling of air supplied indoor when a defrosting operation of the air conditioner having a heating/cooling function is operated, and a controlling method of the same.

### Discussion of the Related Art

The present invention relates to a ventilation device and a controlling method of the same, more particularly, to a ventilation device having a heating/cooling function implemented in communication with an air conditioner, to reduce temperature decrease of air supplied indoor by the air conditioner having a heating/cooling function is operated, and a controlling method of the same.

In general, ventilation devices are electric apparatuses capable of exhausting contaminated internal air and drawing fresh clean external air to supply indoor. An air conditioner without a ventilation function cools or heats internal air, recirculating the air, to cool or heat a room. Although such an air conditioner includes a filter and the like, indoor pollution will increase gradually and an air cleaning function by way of a filter and the like and a ventilation process for internal air will be required accordingly.

As a result, in case an air conditioner configured to cool and heat a room, with circulating internal air, is installed, an auxiliary ventilation device will be provided frequently.

Such a ventilation device includes a heat exchanger to reduce a temperature difference between air supplied from outside (supplied air) and air exhausted from indoors (exhausted air). However, such a heat exchanger implements heat-exchanging, with the supplied air and the exhausted air not mixed with each other. Because of that, the temperature difference between the supplied air and the exhausted air could be reduced but the temperature would be inappropriate to a user.

In this case, it has been introduced that a heating/cooling coil is provided in the ventilation device to heat or cool the supplied air after passing through a heat-exchanger. According to this method, it will be considered that a compressor and a heating/cooling coil are provided in the ventilation device to heat or cool the supplied air, with circulating refrigerant. This method has a problem of much noise and a too large sized ventilation device.

As mentioned above, the ventilation may be used alone and it may be used in communication with the air conditioner configured to heat or cool a room. According to a trend of air conditioners, a system air conditioner having a plurality of indoor units and a plurality of outdoor units are popular and each of the indoor unit may implement a cooling or heating operation selectively.

If the temperature of an outdoor heat exchanger provided in the outdoor unit is decreased below a predetermined value when a specific indoor unit implements a heating operation, a defrosting operation may be implemented to remove frost and the like which would be generated in the outdoor heat exchanger.

During this defrosting operation, an indoor heat exchanger provided in the indoor unit will be used as evaporator, cooling the exhausted air to the room.

According to the ventilation device supplied with refrigerant by the outdoor unit of the air conditioner and in communication there with, the heating/cooling coil of the ventilation device may be used as evaporator during the defrosting operation and the heating/cooling coil used to heat the supplied air may cool the supplied air.

However, if the cold air drawn from the outdoor is cooled again by the heating/cooling coil, the user will feel much colder.

WO 2009/065216 discloses a heat recovery ventilator with a defrost system in which interior space supply air of an integrated fan coil is used for defrosting a heat recovery ventilator/energy recovery ventilator. WO 2007/097513 discloses an air conditioning system and control method, including an air purifying unit, is controlled to perform a defrosting operation while maintaining the interior temperature of a room.

### SUMMARY OF THE DISCLOSURE

The present invention provides a ventilation device and a controlling method of the same, as set out in claims 1 and 14 respectively.

It is desirable to provide a ventilation device which can prevent cooling of air supplied indoor during a defrosting operation of an air conditioner having a heating/cooling function in communication there with, and a controlling method of the same.

Additional advantages, objects, and features of the disclosure will be set forth in part in the description which follows. The objectives and other advantages of the invention may be realized and attained by the structure particularly pointed out in the written description and claims hereof as well as the appended drawings.

To achieve these objects and other advantages there is provided a ventilation device according to claim 1. The heating/cooling unit may include an expansion valve and the refrigerant supplied to the heating/cooling coil may be stopped during the defrosting operation of the outdoor unit by closing the expansion valve.

The ventilation device may further include at least one damper member displaced to guide the supplied air toward a bypassed air path configured to bypass the heating/cooling unit.

The damper member may be displaced to guide the supplied air toward the bypassed air path during a defrosting operation of an outdoor unit configured to supply refrigerant to the heating/cooling unit.

A main air path may be an air path configured to connect a heat exchanger of the ventilation unit with the heating/cooling coil of the heating/cooling unit, and the bypassed air path may be an air path configured for the supplied air to bypass, (that is, not to be supplied to), the heating/cooling coil, and displacement of the damper member selectively controls air flow through the main air path and bypassed air path.

The damper member may include a first damper member configured to open and close a predetermined area of the bypassed air path and a second damper member configured to guide the supplied air having passed the heat exchanger of the ventilation unit toward the first damper member selectively.

The first damper member may be rotatably provided between a side of the heating-cooling coil and a housing of the ventilation device. For example, between a width-direction end of the heating-cooling coil provided in the heating/cooling unit 200 and a housing of the ventilation device.

A rotation angle of the first damper member 710 to open the bypassed air path may be larger than a rotation angle of the second damper member to guide the supplied air toward the bypassed air path.

The damper member may include a horizontal or vertical rotation axis and the damper member may be rotated at a preset angle with respect to the rotation axis. For example, the horizontal and vertical rotation axes may be parallel to surfaces of a housing of the ventilation device.

The damper member may include a horizontal rotation axis and the horizontal rotation axis may be provided obliquely beyond or below the main air path for the damper member to be rotated to close the main air path obliquely.

The ventilation device may further include a humidification unit configured to humidify the supplied air heated or cooled in the heating/cooling unit selectively.

The humidification unit may be arranged adjacent to a rear of the heating/cooling unit such that air having passed through the heating/cooling unit enters the humidification unit.

The supplied air may bypass the humidification unit, when the refrigerant supply to the heating/cooling coil of the heating/cooling unit is stopped in case the defrosting operation of an outdoor unit configured to supply refrigerant to the heating/cooling unit is implemented or when the supplied air bypasses the heating/cooling coil of the heating/cooling unit.

In another aspect, there is provided a controlling method of a ventilation device according to claim 14. The stopping of the refrigerant supply to the heating/cooling coil of the heating/cooling unit may be implemented by closing an expansion valve provided in the heating/cooling coil, and the changing of the air path for the supplied air to bypass the heating/cooling coil of the heating/cooling unit may be implemented by displacing a damper member to guide the supplied air toward a bypassed air path bypassing the heating/cooling coil of the heating/cooling unit in the ventilation.

The displacing of the damper member may be implemented by rotating the damper member with respect to a horizontal or vertical rotation axis.

According to an embodiment of the present invention, there are following advantageous effects.

According to the ventilation device and the controlling method of the same, even when the air conditioner in communication with the ventilation device is defrosting-operated, temperature difference between supplied air to a room and internal air may be reduced as much as possible.

Furthermore, even when the air conditioner in communication with the ventilation device is defrosting-operated, methods of reducing the temperature difference between the supplied air and the internal air may be variable in many ways.

A still further, the defrosting operation of the air conditioner in communication with the ventilation device may be delayed.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.

In the drawings:
FIG. 1 is a perspective view illustrating a ventilation device according to the present invention;
FIG. 2 is a perspective view illustrating flow of supplied air (OA) and exhausted air (EA) inside the ventilation device in a normal operational state of the ventilation device shown in FIG. 1;
FIG. 3 is a diagram illustrating a heat exchanger of a ventilation unit and a heating/cooling coil of a heating/cooling unit which are provided in the ventilation device;
FIG. 4 is a diagram illustrating another operational state of the ventilation device shown in FIG. 2;
FIG. 5 is a diagram illustrating a ventilation device according to another embodiment of the present invention;
FIG. 6 is a diagram illustrating another operational state of the ventilation device shown in FIG. 5;
FIG. 7 is a conceptual diagram illustrating an operation mode of an air conditioner in communication with the ventilation device according to the present invention;
FIG. 8 is a conceptual diagram of an operation mode of an air conditioner in communication with the ventilation device shown in FIGS. 2 and 5; and
FIG 9 is a diagram illustrating a controlling method of the ventilation device according to the present invention.

### DESCRIPTION OF SPECIFIC EMBODIMENTS

Reference will now be made in detail to the preferred embodiments of the present invention, examples of which are illustrated in the accompanying drawings. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or like parts.

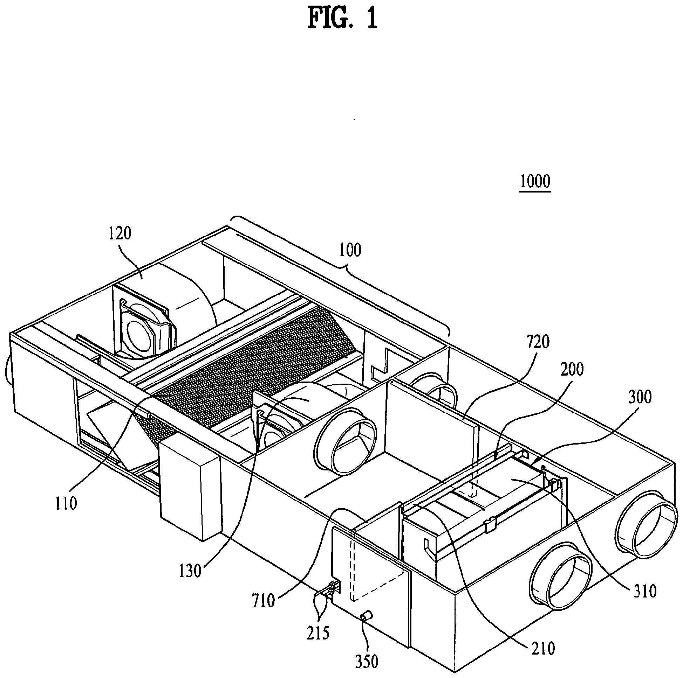

FIG. 1 is a perspective view illustrating a ventilation device according to the present invention.

The ventilation device according to the present invention includes a ventilation unit 100 having a heat exchanger 110 configured to enable exhausted air from indoor and supplied air from outdoor to heat-exchange with each other and a humidification unit 300 having first and second water supply tanks (not shown), a water supply pipe and a humidifying member. The first and second water supply tanks are provided at different heights, respectively. The water supply pipe connects the first and second water supply tanks with each other. The humidifying member absorbs water stored in the first or second water supply tank and it enables the supplied air from the ventilation unit to go there through to humidify the supplied air.

The ventilation device includes a ventilation unit 100 having a supply fan 130, an exhaustion fan 120 and a heat exchanger 110, and a heating/cooling unit 200 having a heating/cooling coil 210. The heat exchanger 110 enables air exhausted from an indoor room removed by exhaustion fan 120 and air supplied from an outdoor by supply fan 130 to heat-exchange with each other. The heating/cooling coil evaporates or condenses refrigerant supplied from an outdoor unit and it implements heat-exchanging with the supplied air, to heat or cool the supplied air supplied from the ventilation unit. Here, when a defrosting operation of the outdoor unit configured to supply refrigerant to the heating/cooling unit is implemented, the ventilation device closes refrigerant supply with respect to the heating/cooling coil of the heating/cooling unit 200 or changes a path of the supplied air, for the supplied air to bypass the heating/cooling coil of the heating/cooling unit.

As follows, the ventilation device shown in FIG. 1 will be described in detail. It is assumed for the ventilation device to include both of the heating/cooling unit and the humidification unit, rather than the ventilation unit.

The ventilation unit configured to implement a ventilation function of the ventilation device may include at least one fan. According to the embodiment shown in FIG 1, the ventilation unit 100 of the ventilation device includes a supply fan 130 and an exhaustion fan 120. The supply fan 130 and the exhaustion fan 120 may supply external air from outdoor and exhaust internal air to outdoor, respectively. The supply fan 130 and the exhaustion fan 120 may located at opposing ends of the ventilation unit 100, but other configurations are possible. The supply fan 130 may be provided in an end toward indoor and the exhaustion fan 120 may be provided in the other end toward outdoor.

A heat exchanger 110 may be provided between the supply fan 130 and the exhaustion fan 120 to enable the supplied air arid the exhausted air to heat-exchange with each other, to prevent radical change of temperatures of internal air and to lower air load of the indoor room.

For example, in a conventional air conditioner, if a ventilation process is implemented during a cooling process for the indoor room, cooled internal air is exhausted and hot external air is drawn such that cooling load (air load) of the air conditioner may increase.

In the currently described embodiment, the air supplied by the heat exchanger 110 and air exhausted by the heat exchanger 110 heat-exchange with each other to reduce cooling load or heating load. As a result, temperature difference sensed by the user may be reduced as much as possible and the cooling load (airload) of the air conditioner is increased less than for a conventional air conditioner. A Specific structure of the heat exchanger 110 will be described in detail later.

The supply fan 130 and the exhaustion fan 120 may be cross flow fans and the heat exchanger 110 may be located between the supply fan 130 and the exhaustion fan 120.

The supply fan 130 draws external air (supplied air) having passed the heat exchanger 110 toward the heating/cooling unit 200 which will be described in detail later and the exhaustion fan 120 exhausts internal air (exhausted air) having passed the heat exchanger 110 to outdoor.

The supplied air drawn by the supply fan 130 may be blown toward the heating/cooling unit 200. The heating/cooling unit 200 includes a heating/cooling coil 210 and an expanding value (not shown). Refrigerant is evaporated or condensed in the heating/cooling coil 210 to heat or cool the supplied air having permeated therein. The expanding valve closes or expands the refrigerant selectively.

Here, the refrigerant passing the heating/cooling coil may be supplied by an outdoor unit of an auxiliary air conditioner independently provided together with the ventilation device. Then, as it will be described later, the refrigerant supplied to the heating/cooling coil may be closed when a defrosting operation of the outdoor unit is implemented.

Although it is possible to install a compressor and a heat exchanger in the ventilation device, the refrigerant may be supplied by the outdoor unit installed outdoor to reduce the volume of the ventilation device and noise generation and to improve heating and cooling efficiency. The heating/cooling coil composing the heating/cooling unit 200 will be described in detail later.

The ventilation device according to the present invention includes at least one damper member configured to stop the supplied air having passed the heat exchanger 110 from being blown to the heating/cooling coil 210 by the supply fan 130 selectively and to change an air path. That is, the ventilation device according to the present invention may include at least one damper member which is displaced for the supplied air to be guided to a bypass path bypassing the heating/cooling unit.

The ventilation device according to the present invention shown in FIG. 1 includes a first damper member 710 and a second damper member 720 rotatably provided between the supply fan 130 and the heating/cooling coil 210.

The damper member may include the first damper member configured to open and close a predetermined area of the bypass-air-path and the second damper member 720 configured to guide the supplied air having passed the heat exchanger of the ventilation unit 100 toward the first damper member 710 selectively.

The first and second damper members 710 and 720 are used to change the air path to enable the supplied air to bypass the heating/cooling coil 210 during the defrosting operation of the air conditioner to supply refrigerant to the heating/cooling coil 210, the air conditioner operated in communication with the ventilation device. That is, during the defrosting operation configured to supply refrigerant to the heating/cooling unit, the damper member may be displaced to guide the supplied air toward the bypass-air-path. This method will be described in detail later.

Here, a main air path inside the ventilation device 1000 is an air path configured to connect the heat exchanger of the ventilation unit 100 with the heating/cooling coil of the heating/cooling unit 200 and the bypass-air-path is an air path configured for the supplied air to bypass, not to be supplied to, the heating/cooling coil by the damper member.

The ventilation device 1000 may further include a humidification unit 300 provided in rear of the heating/cooling unit 200. The humidification unit 300 may be arranged adjacent to a rear surface of the heating/cooling unit 200. As a result, when the defrosting operation of the outdoor unit configured to supply refrigerant to the heating/cooling unit 200 is implemented to stop the refrigerant supply of the heating/cooling unit 200 to the heating/cooling coil 210 or for the supplied air to bypass the heating/cooling coil 210 of the heating/cooling unit, the supplied air may bypass the humidification unit 300 together with the heating/cooling unit 200. The humidification unit 300 may include a humidifying member configured to enable water to be absorbed and to flow there along and to humidify air permeating there through, which will be described later.

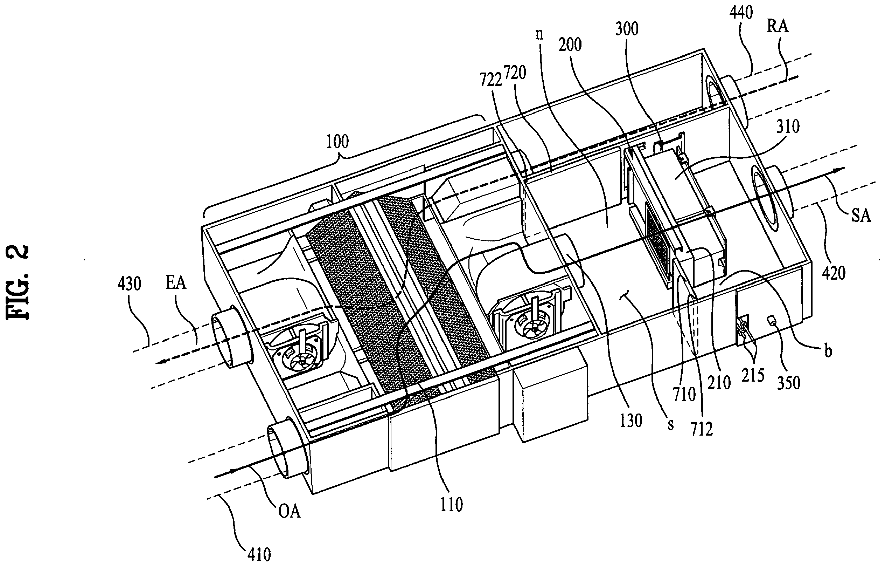

FIG. 2 is a perspective view illustrating flow of supplied air (OA) and exhausted air (EA) inside the ventilation device in a normal operational state of the ventilation device shown in FIG. 1. The ventilation device includes an inlet (not shown) configured to drawn internal air and an outlet (not shown) configured to exhaust internal air.

The process of drawing and exhausting the internal air via the ventilation device may be enabled by first and second exhaustion ducts 430 and 440 connected to the ventilation device. The process of drawing and supplying the external air via the ventilation device may be enabled by first and second supply ducts 410 and 420 connected to the ventilation device.

As shown in FIG. 2, the housing of the ventilation device have an indoor inlet, an indoor outlet, an outdoor inlet and an outdoor outlet.

The outdoor inlet is connected to the first supply duct 410 and the indoor outlet is connected to the second supply duct 420. And the outdoor outlet is connected to the first exhaustion duct 430 and the indoor outlet is connected to the second exhaustion duct 440.After the supplied air (OA) drawn via the first supply duct 410 heat-exchanges in the heat exchanger of the ventilation unit 100, the supplied air is cooled or heated in the heating/cooling coil 210 composing the heating/cooling unit 200 and then the air is humidified in the humidification unit 300 to be supplied to the indoor room (SA).

As shown in FIG. 2, the humidification unit (300) is arranged between the heating/cooling unit (200) and an indoor outlet connected to second supply duct supplying the external air passed through the heating/cooling unit (200) to indoor space.

In contrast, the internal air (RA) from the indoor bypasses the humidification unit 300 or the heating/cooling unit 200, without passing through them, to be heat-exchanged in the heat exchanger 110, before exhausted to the outdoor (EA).

According to the embodiment shown in FIG. 2, the first and second damper members 710 and 720 maintain positions for normal modes, respectively.

That is, the first damper member 710 closes the bypassed air path to keep a perpendicular state (or an oblique state) with respect to a direction of air sucked and blown by the supply fan 130 and the second damper member 720 keeps a parallel state with respect to a normal air path (n) not to close the normal path (n).

The first and second damper members 710 and 720 are rotatably provided in the ventilation device and they are rotated selectively based on an operation mode of the ventilation device or the air conditioner, to change the path of the supplied air.

Specifically, the first damper member 710 may be rotatably provided between a width-direction end of the heating-cooling coil 210 composing the heating/cooling unit 200 and a housing of the ventilation device.

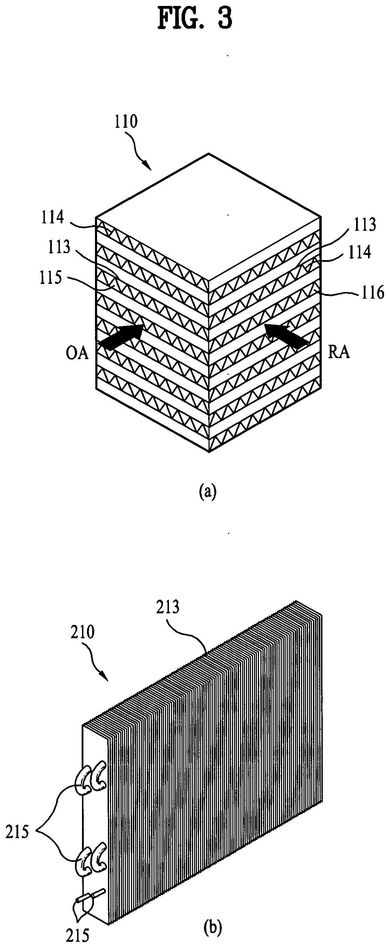

As a result, a predetermined space (S) may be provided between the supply fan 130 and the heating/cooling coil 210 to enable the first and second damper members 710 and 720 to rotate selectively therein, which will be described in detail later. As follows, the structure of the heat exchanger 110 and the heating/cooling coil 210 composing the ventilation unit 100 and the heating/cooling unit, respectively, will be described in reference to FIG. 3.

FIG. 3 illustrates the heat exchanger 110 of the ventilation unit 100 and the heating/cooling coil 210 of the heating/cooling unit 200. FIG. 3 (a) illustrates the heat exchanger 110 of the ventilation unit 100 and FIG. 3(b) illustrates the heating/cooling coil 210 of the heating/cooling unit 200.

As shown in FIG 3(a), the heat exchanger 110 may be configured of plane plate materials 113 and wave-shaped corrugated plate materials 114 which are loaded alternately. The corrugated plate materials 114 of which one is arranged between two plane plate materials 113 may be alternated perpendicularly. For example, such that the ridges of the corrugations of one layer lie perpendicular to ridges of another layer. The heat exchanger 110 may be formed of square column shape.

A first path 115 and a second path 116 may be formed in the heat exchanger 110 by the multi-layered structure of the plane plate materials 113 and the corrugated plate materials 114. Here, the first and second paths 115 and 116 are crossed with each other.

An absorbent configured to absorb vapors may be coated on a surface of the plane plate material 113 or the corrugated plate material 114 of the heat exchanger 110. This absorbent may be silica gel, zeolite, ion exchange resin and the like, for example.

The surface of the plane plate material 113 or the corrugated plate material 114 may be configured of a thin film having absorbent coated thereon such that the air passing the first and second paths 115 and 116 may exchange water elements with each other, together with the heat exchange.

That is, in case the exhausted air (RA) supplied from the indoor flows along the first path 115, with the supplied air drawn from the outdoor flowing along the second path 116, the water elements may be absorbed in the first path 115 by the absorbent to be supplied to the supplied air (OA) of the second path 116 and the humidity of the supplied air (OA) may be heightened accordingly. If the humidification unit 300 is provided in the ventilation device, the humidifying process may be implemented by the humidification unit 300. However, even if the humidification unit is not provided, the humidity difference between the supplied (OA) and the exhausted air (RA) may be reduced firstly.

FIG. 3 (b) is a perspective view illustrating the heating/cooling coil 210 composing the heating/cooling unit 200. The heating/cooling coil 210 may be configured of a cross-fin type fin-tube-heat-exchanger. The heating/cooling coil 210 may include a plurality of fins 213 made of metal such as Aluminum and a refrigerant pipe 215 passing through the fins 213. Although not shown in FIG. 3, an expansion valve (not shown) may be provided to supply refrigerant to the heating/cooling coil 210 selectively. The expansion valve may be an electric expansion valve (EEV) and it may stop or allow the supply of the refrigerant or it may expand the refrigerant drawn into the heating/cooling coil 210.

As a result, in case of cooling the indoor room, the heating/cooling coil 210 may be operated as evaporator and in case of heating the indoor, it may be operated as condenser. The expansion valve may be controlled according to the heating or the cooling of the heating/cooling coil with respect to the supplied air.

Since the ventilation device alone perform enough heating/cooling function, the ventilation device may be operated in communication with an auxiliary air conditioner and the ventilation device may be supplied refrigerant by an outdoor unit of the air conditioner if a compressor and the like should not be provided therein.

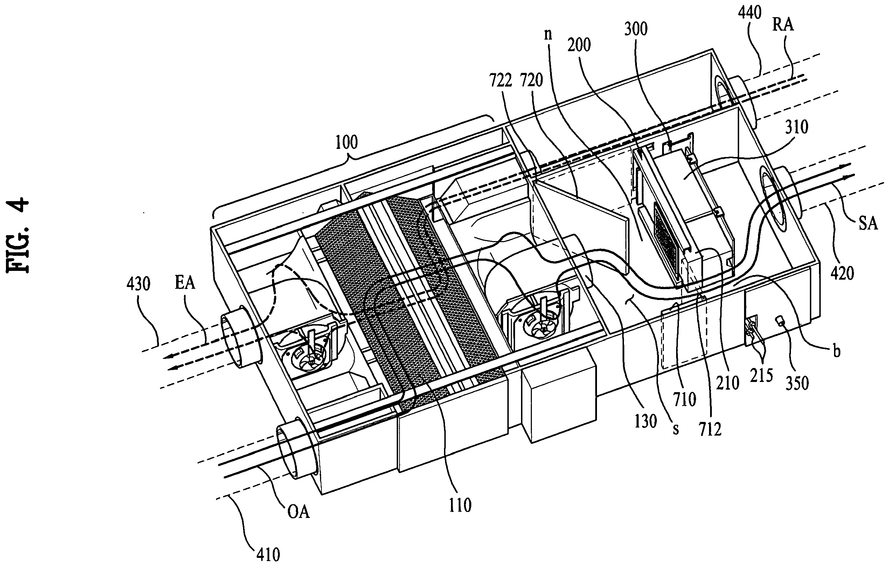

FIG. 4 is a diagram illustrating another operational state of the ventilation device shown in FIG. 2. When the ventilation is supplied with refrigerant by an outdoor unit of an air conditioner in communication there with or it includes an auxiliary outdoor unit, the heating operation is implemented for the heating/cooling coil 210 to heat the supplied air and then the temperature of an outdoor heat exchanger would be decreased below a preset temperature. In this case, a defrosting operation may be implemented.

As a result, during the defrosting operation, the heating/cooling coil 210 may be used as evaporator such that external cold supplied air is drawn and cooled more to be supplied into the room. This could be a problem.

Because of that, when the defrosting operation of the air conditioner is implemented, the first damper member 710 is rotated to open the bypassed air path (b) and the second damper member 720 is rotated to guide the supplied air from the supply fan 130 into the bypassed air path (b).

The rotation angle of first damper member 710 to open the bypassed air path (b), which is approximately 90°, may be larger than the rotation angle of the second damper member 720 to guide the supplied air toward the bypassed air path (b).

As a result, if the rotation angle of the first damper member 710 to open the bypassed air path (b) is approximately 90°, the second damper member 710 may be rotated to be oblique with respect to the direction of the normal air path (n).

Rotation axes 712 and 722 of the first and second damper member 710 and 720 may be installed vertically.

The air supplied from the supply fan 130 is guided by the oblique second damper member 720 to come into the bypassed air path.

The air guided into the bypassed air path (b) bypasses both the heating/cooling unit 200 and the humidification unit 300, to be supplied to the room.

According to the embodiment shown in FIG. 4, the rotation axes of the damper members are installed vertically. However, the damper members could have horizontal or vertical rotation axes, respectively, and each of the damper members may be installed to rotate at a preset angle with respect to each of the rotation axes. That is, rotation axes having any shapes (or orientation) may be the rotation axes of the damper members, only if they are used to bypass the supplied air toward the bypassed air path.

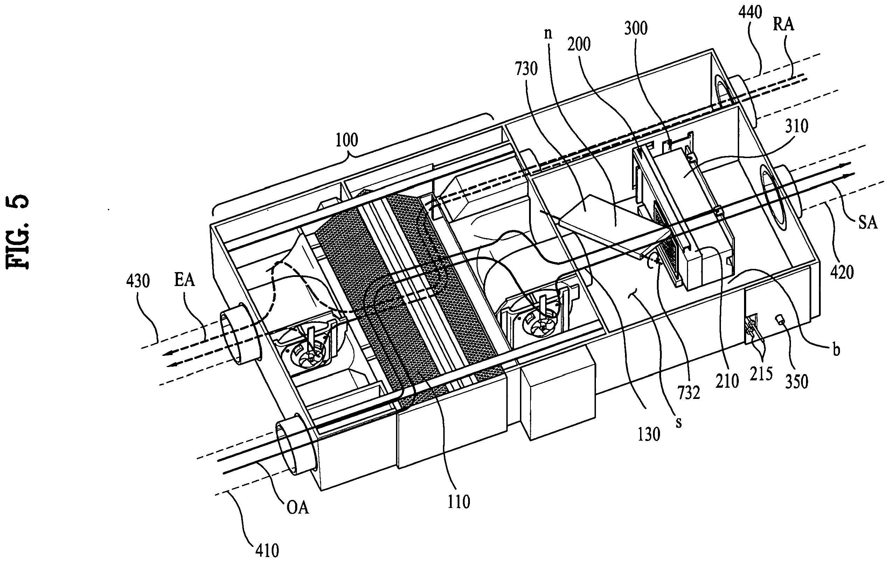

FIG. 5 is a diagram illustrating a ventilation device according to another embodiment of the present invention and repeated descriptions in comparison to the descriptions in reference to FIGS. 2 to 4 will be omitted accordingly.

According to the embodiment shown in FIG. 5, a hinge rotation axis of a third damper member 730 configured to bypass the air supplied from the supply fan 130 toward the bypassed air path (b) is installed horizontally, different from the embodiment shown in FIGS. 2 to 4.

In addition, the ventilation device shown in FIG. 5 includes a single damper member, different from the embodiment shown in FIGS. 2 to 4. That is, when the ventilation is operated normally with the heating function turned on, the third damper member 730 may be controlled to keep the horizontal state.

Because of that, a rotation axis 732 of the third damper member 730 may be installed in a horizontal direction, being oblique with respect to the heating/cooling coil.

That is, the third damper member 730 has a horizontal rotation axis and the horizontal rotation axis is provided obliquely above or below the main path such that the damper member may stops the main air path obliquely during the defrosting operation of the outdoor unit.

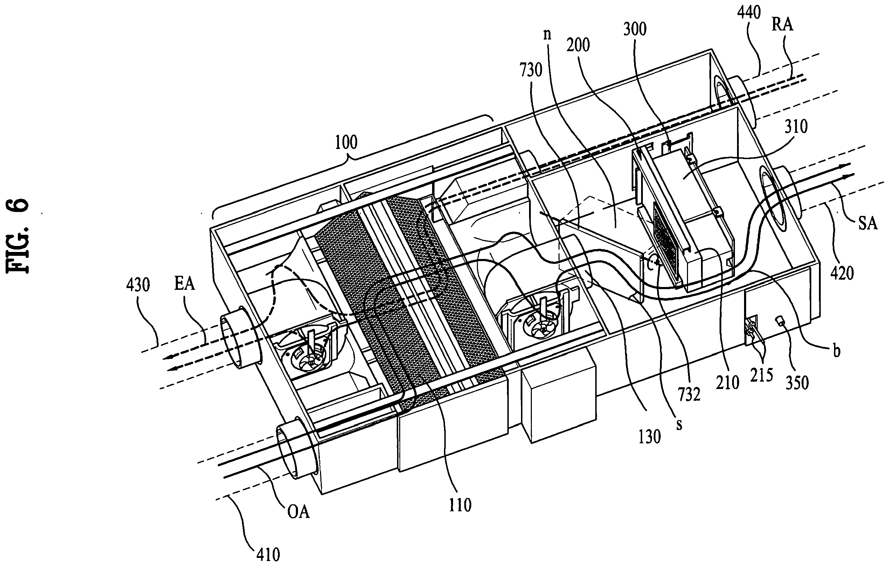

FIG. 6 is a diagram illustrating another operational state of the ventilation device shown in FIG. 5. Similar to the operational state of the ventilation device shown in FIG. 4, the defrosting operation of the air conditioner operated in communication with the ventilation device is implemented and then the third damper member 130 is rotated vertically to guide the supplied air from the supply fan 130 toward the bypassed air path (b), not the normal air path (n). The vertically rotated state of the third damper member 730 provides a similar operation to the rotated state of the second damper member 720 shown in FIG. 4, except the installation direction of the rotation axis and the number of the damper members. The ventilation device according to this embodiment shown in FIG. 5 may further include a damper member configured to open and close the bypassed air path (b) directly.

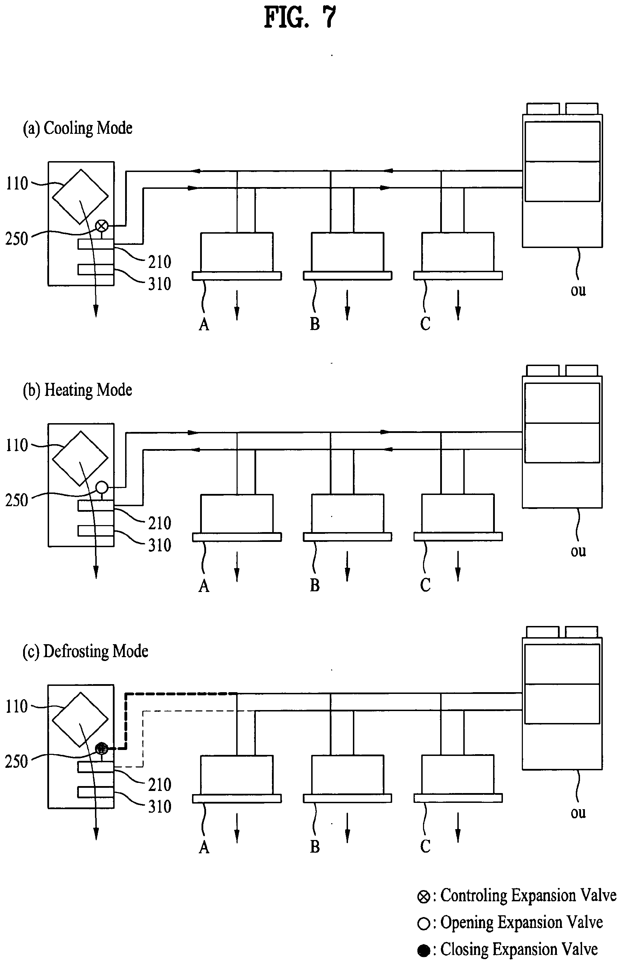

FIG. 7 is a conceptual diagram illustrating an operation mode of the air conditioner in communication with the ventilation device according to the present invention. The air conditioner in communication with the ventilation device may include indoor units (A, B and C) and outdoor units (ou) and the outdoor unit (ou) may supply refrigerant to the heating/cooling coil 210 of the ventilation device.

FIG. 7 (a) is a diagram illustrating a cooling mode configured for the air conditioner and the ventilation device to cool internal air or supplied air. As a result, the expansion valve 250 composing the heating/cooling unit of the ventilation device is operated as expansion valve. The supplied air from the ventilation device may be cooled while passing the heating/cooling coil 210 and the humidifying member 310 in a normal path (n). When the ventilation device cools the supplied air, the humidification unit may not be operated.

FIG. 7 (b) is a diagram illustrating a heating mode configured for the ventilation device to heat the internal air or the supplied air. The heating/cooling coil 210 is used as condenser and it heat the permeating air. The humidifying member 310 humidifies the permeating air. The air heated in the heating/cooling coil 210 is humidified enough to give pleasant feeling to the user. In this case, the expansion valve 250 is open to flow the refrigerant.

FIG. 7 (C) is a diagram illustrating a defrosting mode configured for the air conditioner and the ventilation device to heat an outdoor heat exchanger. If the temperature of the outdoor heat exchanger provided in the outdoor unit (ou) is lowered below a preset temperature, the defrosting operation is required for heating efficiency.

In this case, closing the refrigerant supplied to the heating/cooling coil 210 may prevent the supplied air from being cooled additionally. That is, the refrigerant supplied to the heating/cooling coil is stopped to achieve the same effect, not bypassing the path of the supplied air with the heating/cooling coil 210 operated as evaporator.

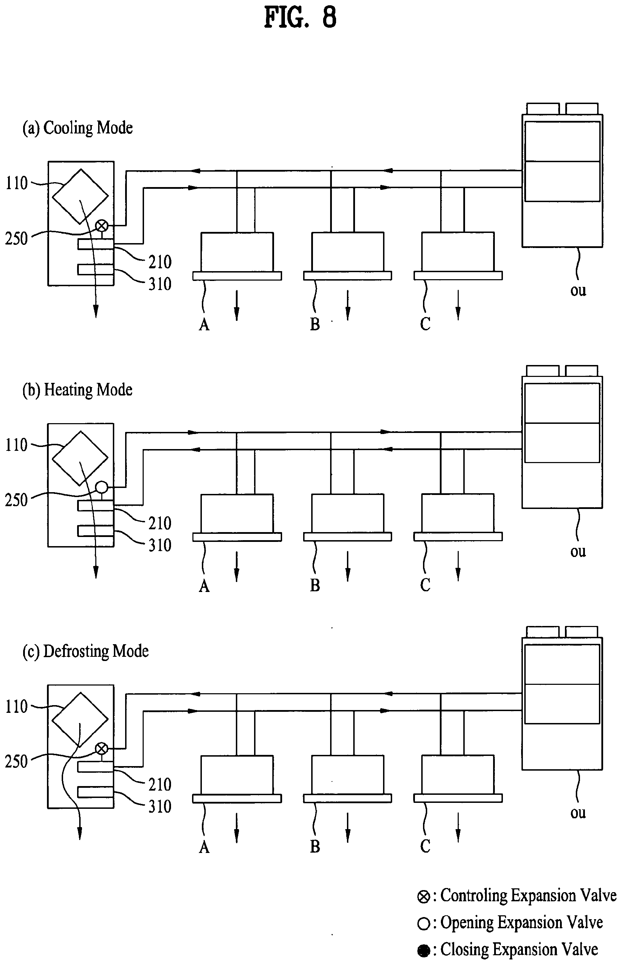

FIG. 8 is a conceptual diagram illustrating an operation mode of the air conditioner in communication with the ventilation device shown in FIG. 5. Figure 8 contains similar features to figure 7. Repeated descriptions in comparison to the description in reference to FIG. 7 will be omitted. The ventilation device shown in FIGS. 2 and 5 uses the damper member configured to guide the supplied air toward the bypassed air path (b) during the defrosting operation.

As a result, as shown in FIG. 8 (c), when refrigerant is supplied to the heating/cooling coil 210, the supplied air may bypass the heating/cooling coil 210 to be supplied to the room.

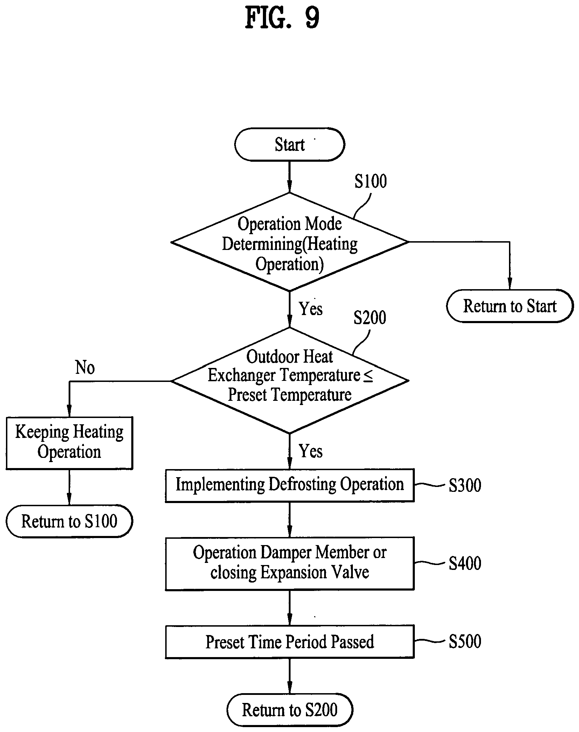

FIG. 9 is a controlling method of the ventilation device according to the present invention. The controlling method of the ventilation device including the air conditioner including at least one indoor unit and outdoor unit and the heating/cooling coil configured to heat or cool the supplied air by using refrigerant supplied thereto by the outdoor unit of the air conditioner may include an operation determining step (S100), a temperature measuring step (S200), a defrosting operation step (S300) and a ventilation device controlling step (S400). The operation determining step (S100) determines whether the indoor unit of the air conditioner is operated in a cooling operation or a heating operation. When at least one of the indoor units composing the air conditioner is put into heating operation, the temperature measuring step (S200) measures the temperature of an outdoor heat exchanger provided in the outdoor unit configured to supply refrigerant to the indoor unit put into heating-operation. When the temperature measured in the temperature measuring step (S200) is a preset temperature or lower, the defrosting operation step (S300) implements a defrosting operation. When the defrosting operation step (S300) is implemented, the ventilation device controlling step (S400) prevents the supplied air supplied to the room from the ventilation device from being cooled by the heating/cooling coil.

According to the controlling method of the ventilation device, the operation determining step (S100) determines whether the indoor unit of the air conditioner is put into heating operation or cooling operation.

If the air conditioner or the ventilation device is put into heating operation based on the result of the operation determining step (S100), the temperature measuring step (S200) measures the temperature of the outdoor heat exchanger configured to supply refrigerant to the indoor unit implementing the heating operation. When the temperature measured in the temperature measuring step (S200) is the preset temperature or lower, the defrosting operation step (S300) is implemented. Once the defrosting operation step (S300) starts, the ventilation device controlling step (S400) is implemented.

The ventilation device controlling step (S400) may stop the supply of the refrigerant to the heating/cooling coil of the heating/cooling unit or change a path of the supplied air to enable the supplied air to bypass the heating/cooling coil of the heating/cooling unit.

The stop of the refrigerant supply to the heating/cooling coil of the heating/cooling unit in the ventilation device controlling step (S400) may be enabled by closing the expansion valve provided in the heating/cooling coil. The path change of the supplied air guided to bypass the heating/cooling coil of the heating/cooling unit may be enabled by displacing the damper member to guide the supplied air toward the bypassed air path bypassing the heating/cooling unit.

That is, if the damper member is installed in the ventilation device, the damper member is rotated or displaced to prevent the supplied air from being cooled. If the damper member is not provided, the expansion valve is closed to prevent the refrigerant from being supplied to the heating/cooling coil, as mentioned above. Such the ventilation device controlling step (S400) may be implemented continuously for a preset time period and it may return to the operation determining step (S100) to determine whether the indoor unit is put into heating operation or cooling operation.

The method for preventing the cooling of the air supplied indoor during the defrosting operation by bypassing the supplied air by way of the damper member provided in the ventilation device or stopping the refrigerant supplied to the heating/cooling unit of the ventilation device is described.

However, to prevent or delay the defrosting operation as long as possible, a refrigerant pipe may be heated to prevent the refrigerant from being cooled too much. That is, an induction heater is installed in the refrigerant pipe to prevent the temperature of the outdoor heat exchanger provided in the air conditioner from being lowered too much.

In other words, the induction heater is installed in the refrigerant pipe to heat the refrigerant supplied to the outdoor heat exchanger, which is used as evaporator, during the heating operation, and the start of the defrosting operation may be delayed as long as possible or prevented.

Although the expansion valve of the heating/cooling unit is closed or the supplied air is bypassed when the defrosting operation is implemented in the ventilation device, external cold air would be drawn indoor without the heating process and people living indoor in winter may feel cold. Because of that, the heater is provided adjacent to the outdoor heat exchanger to prevent the defrosting operation from delaying or preventing the start.

The heater (not shown) may be an induction heater and the induction heater is a heater which uses induction currents generated by a magnetic field as heating source. When metal is placed on the heater, an eddy current is generated in the metal by an electromagnetic induction phenomenon and the metal is heated by Joule's heat. Even though strong heat is generated temporarily, the metal container is required to generate the heat.

This method of installing the induction heater in the refrigerant pipe connected with the outdoor heat exchanger may be used together with the method of bypassing the supplied air by way of the damper member or the method of closing the expansion valve of the heating/cooling unit.

In this case, when the air conditioner and the ventilation device are put into heating operation, the induction heater heats the refrigerant supplied to the outdoor heat exchanger, which is the evaporator, and it increases the temperature of the outdoor heat exchanger, only to delay or prevent the defrosting operation. Even if the defrosting operation is implemented, the supplied air may be bypassed or the refrigerant supply may be stopped to prevent the additional cooling of the supplied air supplied to the room.

It will be apparent to those skilled in the art that various modifications and variations can be made in the present invention without departing from the scope of the invention as defined by the appended claims.

## Claims

1. A ventilation device in combination with an air conditioner, comprising:
a ventilation unit (100) comprising a supply fan (130), an exhaustion fan (120) and a heat exchanger (110) positioned between the supply fan (130) and the exhaustion fan (120) for heat-exchanging exhausted air from indoor by the exhaustion fan (120) and supplied air from outdoor by the supply fan (130) with each other; and
a heating/cooling unit (200) comprising a heating/cooling coil (210) which is supplied refrigerant from an outdoor unit of the air conditioner for heating or cooling the supplied air from the ventilation unit, and is operated as evaporator in case of cooling the indoor space and as condenser in case of heating the indoor space;
**characterized in that** the ventilation device is arranged such that when a defrosting operation of the outdoor unit is implemented, refrigerant supply to the heating/cooling coil (210) of the heating/cooling unit (200) is closed or a path of the supplied air is changed for the supplied air to bypass the heating/cooling coil (210) of the heating/cooling unit, to prevent the supplied air drawn into the indoor space from the ventilation device from being cooled by the heating/cooling coil (210).

2. The ventilation device of claim1, wherein the heating/cooling unit (200) comprises an expansion valve and the refrigerant supplied to the heating/cooling coil is stopped during the defrosting operation of the outdoor unit.

3. The ventilation device of any preceding claim, further comprising:
at least one damper member (710,720,730) arranged to be displaced to guide the supplied air toward a bypassed air path configured to bypass the heating/cooling unit (200).

4. The ventilation device of claim 3, wherein the damper member (710,720,730) is arranged to be displaced to guide the supplied air toward the bypassed air path during a defrosting operation of an outdoor unit configured to supply refrigerant to the heating/cooling unit.

5. The ventilation device of claim 3 or claim 4, wherein a main air path is an air path configured to connect the heat exchanger (110) of the ventilation unit with the heating/cooling coil (210) of the heating/cooling unit and the bypassed air path is an air path configured for the supplied air to bypass the heating/cooling coil by the damper member.

6. The ventilation device of claim 5, wherein the damper member comprises a first damper member (710) configured to open and close a predetermined area of the bypassed air path and a second damper member (720,730) configured to guide the supplied air having passed the heat exchanger of the ventilation unit toward the first damper member selectively.

7. The ventilation device of claim 6, wherein the first damper member (710) is rotatably provided between a width-direction end of the heating-cooling coil provided in the heating/cooling unit and a housing of the ventilation device.

8. The ventilation device of any of claims 3 to 7, wherein the damper member comprises a horizontal or vertical rotation axis and the damper member is rotated at a preset angle with respect to the rotation axis.

9. The ventilation device of claim 6 wherein the damper member comprises a horizontal rotation axis and the horizontal rotation axis is provided obliquely beyond or below the main air path for the damper member to be rotated to close the main air path obliquely.

10. The ventilation device of any preceding claim, further comprising:
a humidification unit (300) configured to humidify the supplied air heated or cooled in the heating/cooling unit (200) selectively.

11. The ventilation device of claim 10 wherein the humidification unit (300) is arranged between the heating/cooling unit (200) and an indoor outlet connected to a supply duct supplying the external air passed through the heating/cooling unit (200) to indoor space.

12. The ventilation device of claim 11, wherein the ventilation device is arranged such that the supplied air bypasses the humidification unit (300), when the refrigerant supply to the heating/cooling coil of the heating/cooling unit is stopped in case the defrosting operation of an outdoor unit configured to supply refrigerant to the heating/cooling unit is implemented, or when the supplied air bypasses the heating/cooling coil of the heating/cooling unit.

13. The ventilation device of any preceding claim, comprising:
a ventilation device housing configured to accommodate the ventilation unit (100) and the heating/cooling unit (200), the ventilation device housing comprising a main air path configured to communicate the ventilation unit (100) with the heating/cooling unit (200) and a bypassed air path configured to guide the supplied air from the ventilation unit to bypass the heating/cooling unit.

14. A controlling method of a ventilation device in combination with an air conditioner comprising the air conditioner having at least one indoor unit and outdoor unit to heat/cool an indoor space and a heating/cooling coil (210) configured to heat or cool supplied air by using the refrigerant supplied by the outdoor unit of the air conditioner, the heating/cooling coil (210) is operated as an evaporator in case of the outdoor unit cooling the indoor space and as a condenser in the case of the outdoor unit heating the indoor space, the ventilation device further comprising a supply fan (130), an exhaustion fan (120) and a heat-exchanger (110) for heat-exchanging exhausted air from indoor and supplied air from outdoor with each other, the controlling method comprising:
determining (S100) whether the indoor unit of the air conditioner is put into heating operation or cooling operation;
measuring (S200) a temperature of an outdoor heat exchanger of the outdoor unit configured to supply refrigerant to the indoor unit put into heating operation, when at least one indoor unit of the air conditioner is put into heating operation;
implementing (S300) a defrosting operation of the outdoor unit, when the temperature measured is a preset temperature or lower; and
controlling the ventilation device to supply air from outdoor to the indoor space and to prevent the supplied air drawn into the indoor space from the ventilation device from being cooled by the heating/cooling coil (210), when the defrosting operation is implemented,
**characterized in that** the ventilation device is controlled by stopping the refrigerant supply to the heating/cooling coil (210) of the heating/cooling unit or changing a path of the supplied air into the indoor space to bypass the heating/cooling coil (210) of the heating/cooling unit.

15. The controlling method of claim 14, wherein the stopping of the refrigerant supply to the heating/cooling coil of the heating/cooling unit is implemented by (S400) closing an expansion valve provided in the heating/cooling coil, and the changing of the air path for the supplied air to bypass the heating/cooling coil of the heating/cooling unit is implemented by displacing a damper member to guide the supplied air toward a bypassed air path bypassing the heating/cooling coil of the heating/cooling unit in the ventilation.

## Patentansprüche

1. Belüftungsvorrichtung kombiniert mit einer Klimaanlage, aufweisend:
eine Belüftungseinheit (100), die ein Zuluftgebläse (130), ein Abluftgebläse (120) und einen Wärmetauscher (110) aufweist, der zwischen dem Zuluftgebläse (130) und dem Abluftgebläse (120) angeordnet ist, um Wärme zwischen der von dem Abluftgebläse (120) abgegebenen Innenraumabluft und der von dem Zuluftgebläse (130) von außen zugeführten Zuluft zu tauschen; und
eine Heiz-/Kühleinheit (200), die eine Heiz-/Kühlschlange (210) aufweist, der von einer Außeneinheit der Klimaanlage ein Kältemittel zugeführt wird, um die von der Belüftungseinheit zugeführte Luft zu heizen oder zu kühlen, und die im Falle eines Kühlens des Innenraums als Verdampfer und im Falle eines Heizens des Innenraums als Kondensator betrieben wird;
**dadurch gekennzeichnet, dass** die Belüftungsvorrichtung so ausgebildet ist, dass die Kältemittelzufuhr zu der Heiz-/Kühlschlange (210) der Heiz-/Kühleinheit (200) beendet wird, wenn die Au-βeneinheit abgetaut wird, oder ein Zuluftpfad geändert wird, damit die Zuluft die Heiz-/Kühlschlange (210) der Heiz-/Kühleinheit (200) umgeht, sodass verhindert wird, dass die von der Belüftungsvorrichtung in den Innenraum geführte Zuluft von der Heiz-/Kühlschlange (210) gekühlt wird.

2. Belüftungsvorrichtung nach Anspruch 1, wobei die Heiz-/Kühleinheit (200) ein Expansionsventil aufweist und das der Heiz-/ Kühlschlange zugeführte Kältemittel gestoppt wird, wenn die Au-βeneinheit abgetaut wird.

3. Belüftungsvorrichtung nach einem der vorhergehenden Ansprüche, die ferner aufweist:
zumindest ein Klappenelement (710, 720, 730), das zum Verlagern ausgebildet ist, um die Zuluft zu einem Umgehungsluftpfad zu führen, der zum Umgehen der Heiz-/Kühleinheit (200) ausgebildet ist.

4. Belüftungsvorrichtung nach Anspruch 3, wobei das Klappenelement (710, 720, 730) zum Verlagern ausgebildet ist, um die Zuluft während eines Abtauens einer Außeneinheit, die zum Zuführen eines Kältemittels an die Heiz-/Kühleinheit ausgebildet ist, zu dem Umgehungsluftpfad zu führen.

5. Belüftungsvorrichtung nach Anspruch 3 oder Anspruch 4, wobei ein Hauptluftpfad ein Luftpfad ist, der zum Verbinden des Wärmetauschers (110) der Belüftungseinheit mit der Heiz-/Kühlschlange (210) der Heiz-/Kühleinheit ausgebildet ist, und der Umgehungsluftpfad ein Luftpfad ist, der so ausgebildet ist, dass die Zuluft durch das Klappenelement die Heiz-/Kühlschlange umgeht.

6. Belüftungsvorrichtung nach Anspruch 5, wobei das Klappenelement ein erstes Klappenelement (710), das zum Öffnen und Schließen eines vorgegebenen Bereichs des Umgehungsluftpfades ausgebildet ist, und ein zweites Klappenelement (720, 730) aufweist, das ausgebildet ist, die Zuluft, die den Wärmetauscher der Belüftungseinheit passiert hat, selektiv zum ersten Klappenelement zu führen.

7. Belüftungsvorrichtung nach Anspruch 6, wobei das erste Klappenelement (710) zwischen einem Ende der in der Heiz-/Kühleinheit angeordneten Heiz-/Kühlschlange in Breitenrichtung und einem Gehäuse der Belüftungsvorrichtung drehbar angeordnet ist.

8. Belüftungsvorrichtung nach einem der Ansprüche 3 bis 7, wobei das Klappenelement eine horizontale oder vertikale Drehachse aufweist und das Klappenelement um einen voreingestellten Winkel um die Drehachse gedreht wird.

9. Belüftungsvorrichtung nach Anspruch 6, wobei das Klappenelement eine horizontale Drehachse aufweist und die horizontale Drehachse quer über oder unter dem Hauptluftpfad angeordnet ist, damit das Klappenelement gedreht werden kann, um den Hauptluftpfad quer zu verschließen.

10. Belüftungsvorrichtung nach einem der vorhergehenden Ansprüche, die ferner aufweist:
eine Befeuchtungseinheit (300), die zum selektiven Befeuchten der in der Heiz-/Kühleinheit (200) erwärmten oder gekühlten Zuluft ausgebildet ist.

11. Belüftungsvorrichtung nach Anspruch 10, wobei die Befeuchtungseinheit (300) zwischen der Heiz-/Kühleinheit (200) und einem Innenraumauslass angeordnet ist, der mit einer Zuluftleitung verbunden ist, die die durch die Heiz-/Kühleinheit (200) geführte Außenluft in den Innenraum führt.

12. Belüftungsvorrichtung nach Anspruch 11, wobei die Belüftungsvorrichtung so ausgebildet ist, dass die Zuluft die Befeuchtungseinheit (300) umgeht, wenn die Kältemittelzufuhr zu der Heiz-/ Kühlschlange der Heiz-/Kühleinheit im Falle eines Abtauens einer Außeneinheit beendet wird, die zum Zuführen des Kältemittels zu der Heiz-/Kühleinheit ausgebildet ist, oder wenn die Zuluft die Heiz-/Kühlschlange der Heiz-/Kühleinheit umgeht.

13. Belüftungsvorrichtung nach einem der vorhergehenden Ansprüche, die aufweist:
ein Belüftungsvorrichtungsgehäuse, das zum Aufnehmen der Belüftungseinheit (100) und der Heiz-/Kühleinheit (200) ausgebildet ist, wobei das Belüftungsvorrichtungsgehäuse einen Hauptluftpfad, der zum Herstellen einer Verbindung zwischen der Belüftungseinheit (100) und der Heiz-/Kühleinheit (200) ausgebildet ist, und einen Umgehungsluftpfad aufweist, der so ausgebildet ist, dass die von der Belüftungseinheit zugeführte Zuluft die Heiz-/Kühleinheit umgeht.

14. Steuerverfahren für eine Belüftungsvorrichtung kombiniert mit einer Klimaanlage, wobei die Klimaanlage zumindest eine Innenraumeinheit und eine Außeneinheit zum Heizen/Kühlen eines Innenraums und eine Heiz-/Kühlschlange (210) aufweist, die zum Erwärmen oder Kühlen von Zuluft unter Verwendung des von der Außeneinheit der Klimaanlage zugeführten Kältemittel ausgebildet ist, wobei die Heiz-/Kühlschlange (210) im Falle eines Kühlens des Innenraums mittels der Außeneinheit als Verdampfer und im Falle eines Heizens des Innenraums mittels der Außeneinheit als Kondensator betrieben wird, wobei die Belüftungsvorrichtung ferner ein Zuluftgebläse (130), ein Abluftgebläse (120) und einen Wärmetauscher (110) aufweist, um Wärme zwischen einer Abluft aus dem Innenraum und einer von außen zugeführten Zuluft zu tauschen; wobei das Steuerverfahren umfasst:
Bestimmen (S100), ob sich die Innenraumeinheit der Klimaanlage in einem Heizbetrieb oder Kühlbetrieb befindet;
Messen (S200) einer Temperatur eines Außenwärmetauschers der Außeneinheit, die ausgebildet ist, der sich im Heizbetrieb befindenden Innenraumeinheit Kältemittel zuzuführen, wenn sich zumindest eine Innenraumeinheit der Klimaanlage im Heizbetrieb befindet;
Abtauen (S300) der Außeneinheit, wenn die gemessene Temperatur einer voreingestellten Temperatur entspricht oder darunter liegt; und
Steuern der Belüftungsvorrichtung, um dem Innenraum von au-βen Luft zuzuführen und um zu verhindern, dass von der Belüftungsvorrichtung in den Innenraum geführte Zuluft während des Abtauvorgangs über die Heiz-/Kühlschlange (210) gekühlt wird, **dadurch gekennzeichnet, dass** die Belüftungsvorrichtung so gesteuert wird, dass die Zufuhr des Kältemittels zu der Heiz-/Kühlschlange (210) der Heiz-/Kühleinheit beendet wird, oder ein Pfad der in den Innenraum geführten Zuluft geändert wird, damit diese die Heiz-/Kühlschlange (210) der Heiz-/Kühleinheit (200) umgeht.

15. Steuerverfahren nach Anspruch 14, wobei das Beenden der Kältemittelzufuhr zur Heiz-/Kühlschlange der Heiz-/Kühleinheit durch (S400) Schließen eines Expansionsventils erfolgt, das in der Heiz-/Kühlschlange angeordnet ist, und das Ändern des Luftpfades, damit die Zuluft die Heiz-/Kühlschlange der Heiz-/ Kühleinheit umgeht, durch Verlagern eines Klappenelements erfolgt, damit die Zuluft zu einem Umgehungsluftpfad geführt wird, der die Heiz-/Kühlschlange der Heiz-/Kühleinheit bei der Belüftung umgeht.

## Revendications

1. Dispositif de ventilation en combinaison avec un climatiseur, comprenant :
une unité de ventilation (100) qui comprend un ventilateur de soufflage (130), un ventilateur d'extraction (120) et un échangeur thermique (110) positionné entre le ventilateur de soufflage (130) et le ventilateur d'extraction (120) pour procéder à un échange thermique de l'air évacué depuis l'intérieur par le ventilateur d'extraction (120) et de l'air fourni depuis l'extérieur par le ventilateur de soufflage (130) l'un avec l'autre ; et
une unité de chauffage/refroidissement (200) qui comprend une bobine de chauffage/de refroidissement (210) qui est alimentée en réfrigérant par une unité d'extérieur du climatiseur afin de chauffer ou de refroidir l'air fourni par l'unité de ventilation, et est utilisée comme un évaporateur en cas de refroidissement de l'espace intérieur et comme un condensateur en cas de chauffage de l'espace intérieur ;
**caractérisé en ce que** le dispositif de ventilation est prévu de sorte que, lorsqu'une opération de dégivrage de l'unité d'extérieur est effectuée, l'alimentation en réfrigérant de la bobine de chauffage/de refroidissement (210) de l'unité de chauffage/de refroidissement (200) soit fermée, ou qu'un trajet de l'air soufflé soit modifié afin que l'air soufflé contourne la bobine de chauffage/de refroidissement (210) de l'unité de chauffage/de refroidissement, afin d'empêcher l'air soufflé aspiré dans l'espace intérieur depuis le dispositif de ventilation d'être refroidi par la bobine de chauffage/de refroidissement (210).

2. Dispositif de ventilation selon la revendication 1, dans lequel l'unité de chauffage/de refroidissement (200) comprend une soupape de détente et le réfrigérant fourni à la bobine de chauffage/de refroidissement est arrêté pendant l'opération de dégivrage de l'unité d'extérieur.

3. Dispositif de ventilation selon l'une quelconque des revendications précédentes, qui comprend en outre :
au moins un élément d'amortissement (710, 720, 730) prévu pour être déplacé afin de guider l'air soufflé vers un trajet d'air contourné configuré pour contourner l'unité de chauffage/de refroidissement (200).

4. Dispositif de ventilation selon la revendication 3, dans lequel l'élément d'amortissement (710, 720, 730) est prévu pour être déplacé afin de guider l'air soufflé vers le trajet d'air contourné pendant une opération de dégivrage d'une unité d'extérieur configurée pour fournir du réfrigérant à l'unité de chauffage/de refroidissement.

5. Dispositif de ventilation selon la revendication 3 ou 4, dans lequel un trajet d'air principal est un trajet d'air configuré pour relier l'échangeur thermique (110) de l'unité de ventilation à la bobine de chauffage/de refroidissement (210) de l'unité de chauffage/de refroidissement, et le trajet d'air contourné est un trajet d'air configuré pour que l'air soufflé contourne la bobine de chauffage/de refroidissement à l'aide de l'élément d'amortissement.

6. Dispositif de ventilation selon la revendication 5, dans lequel l'élément d'amortissement comprend un premier élément d'amortissement (710) configuré pour ouvrir et fermer une zone prédéterminée du trajet d'air contourné et un second élément d'amortissement (720, 730) configuré pour guider l'air soufflé qui est passé par l'échangeur thermique de l'unité de ventilation vers le premier élément d'amortissement de manière sélective.

7. Dispositif de ventilation selon la revendication 6, dans lequel le premier élément d'amortissement (710) est prévu de manière rotative entre une extrémité dans le sens de la largeur de la bobine de chauffage/de refroidissement prévue dans l'unité de chauffage/de refroidissement et une enceinte du dispositif de ventilation.

8. Dispositif de ventilation selon l'une quelconque des revendications 3 à 7, dans lequel l'élément d'amortissement comprend un axe de rotation horizontal ou vertical et l'élément d'amortissement est tourné à un angle prédéfini par rapport à l'axe de rotation.

9. Dispositif de ventilation selon la revendication 6, dans lequel l'élément d'amortissement comprend un axe de rotation horizontal et l'axe de rotation horizontal est prévu à l'oblique au-delà de ou sous le trajet d'air principal afin que l'élément d'amortissement soit tourné de façon à fermer le trajet d'air principal à l'oblique.

10. Dispositif de ventilation selon l'une quelconque des revendications précédentes, qui comprend en outre :
une unité d'humidification (300) configurée pour humidifier l'air soufflé chauffé ou refroidi dans l'unité de chauffage/de refroidissement (200) de manière sélective.

11. Dispositif de ventilation selon la revendication 10, dans lequel l'unité d'humidification (300) est prévue entre l'unité de chauffage/de refroidissement (200) et une évacuation d'intérieur reliée à un conduit d'alimentation qui fournit l'air externe qui est passé par l'unité de chauffage/de refroidissement (200) à l'espace intérieur.

12. Dispositif de ventilation selon la revendication 11, dans lequel le dispositif de ventilation est prévu de sorte que l'air soufflé contourne l'unité d'humidification (300), lorsque l'alimentation en réfrigérant de la bobine de chauffage/de refroidissement de l'unité de chauffage/de refroidissement est arrêtée lorsque l'opération de dégivrage d'une unité d'extérieur configurée pour fournir un réfrigérant à l'unité de chauffage/de refroidissement est effectuée, ou lorsque l'air soufflé contourne la bobine de chauffage/de refroidissement de l'unité de chauffage/de refroidissement.

13. Dispositif de ventilation selon l'une quelconque des revendications précédentes, qui comprend :
une enceinte de dispositif de ventilation configurée pour contenir l'unité de ventilation (100) et l'unité de chauffage/de refroidissement (200), l'enceinte de dispositif de ventilation comprenant un trajet d'air principal configuré pour faire communiquer l'unité de ventilation (100) avec l'unité de chauffage/de refroidissement (200) et un trajet d'air contourné configuré pour guider l'air soufflé qui provient de l'unité de ventilation afin de contourner l'unité de chauffage/de refroidissement.

14. Procédé de commande d'un dispositif de ventilation en combinaison avec un climatiseur qui comprend le climatiseur qui possède au moins une unité d'intérieur et une unité d'extérieur afin de chauffer/de refroidir un espace intérieur et une bobine de chauffage/de refroidissement (210) configurée pour chauffer ou refroidir l'air soufflé à l'aide du réfrigérant fourni par l'unité d'extérieur du climatiseur, la bobine de chauffage/de refroidissement (210) étant utilisée comme un évaporateur lorsque l'unité d'extérieur refroidit l'espace intérieur et comme un condensateur lorsque l'unité d'extérieur chauffe l'espace intérieur, le dispositif de ventilation comprenant en outre un ventilateur de soufflage (130), un ventilateur d'extraction (120) et un échangeur thermique (110) destiné à procéder à un échange thermique de l'air évacué depuis l'intérieur et de l'air fourni depuis l'extérieur l'un avec l'autre, le procédé de commande comprenant :
la détermination (S100) du fait que l'unité d'intérieur du climatiseur soit placée en mode de chauffage ou en mode de refroidissement ;
la mesure (S200) d'une température d'un échangeur thermique d'extérieur de l'unité d'extérieur configuré pour fournir du réfrigérant à l'unité d'intérieur placée en mode de chauffage, lorsqu'au moins une unité d'intérieur du climatiseur est placée en mode de chauffage ;
l'exécution (S300) d'une opération de dégivrage de l'unité d'extérieur, lorsque la température mesurée est égale ou inférieure à une température prédéfinie ; et
la commande du dispositif de ventilation afin de fournir l'air qui provient de l'extérieur à l'espace intérieur et d'empêcher l'air soufflé aspiré dans l'espace intérieur depuis le dispositif de ventilation d'être refroidi par la bobine de chauffage/de refroidissement (210), lorsque l'opération de dégivrage est effectuée,
**caractérisé en ce que** le dispositif de ventilation est commandé en arrêtant l'alimentation en réfrigérant de la bobine de chauffage/de refroidissement (210) de l'unité de chauffage/de refroidissement ou en modifiant un trajet de l'air soufflé vers l'espace intérieur afin de contourner la bobine de chauffage/de refroidissement (210) de l'unité de chauffage/de refroidissement.

15. Procédé de commande selon la revendication 14, dans lequel l'arrêt de l'alimentation en réfrigérant de la bobine de chauffage/de refroidissement de l'unité de chauffage/de refroidissement est mis en oeuvre en (S400) fermant une soupape de détente prévue dans la bobine de chauffage/de refroidissement, et la modification du trajet d'air pour l'air soufflé afin de contourner la bobine de chauffage/de refroidissement de l'unité de chauffage/de refroidissement est effectuée en déplaçant un élément d'amortissement afin de guider l'air soufflé vers un trajet d'air contourné qui contourne la bobine de chauffage/de refroidissement de l'unité de chauffage/de refroidissement pendant la ventilation.
